(19) Europäisches Patentamt
European Patent Office
Office européen des brevets

(11) **EP 3 955 206 A1**

(12) **EUROPEAN PATENT APPLICATION**

(43) Date of publication:
**16.02.2022 Bulletin 2022/07**

(21) Application number: **20190337.4**

(22) Date of filing: **10.08.2020**

(51) International Patent Classification (IPC):
*G06T 7/00* (2017.01)  *G06T 7/73* (2017.01)

(52) Cooperative Patent Classification (CPC):
**G06T 7/0008; G06T 7/73;** G06T 2207/20081;
G06T 2207/20092; G06T 2207/30164

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **GKN Aerospace Norway AS
3616 Kongsberg (NO)**
• **Politecnico di Milano
20133 Milano (IT)**

(72) Inventors:
• **CAPUTO, Davide
3616 Kongsberg (NO)**
• **MUSSETTA, Marco
20133 Milano (IT)**
• **CHIECO, Leonardo
70026 Modugno (IT)**

(74) Representative: **D Young & Co LLP
120 Holborn
London EC1N 2DY (GB)**

(54) **AUTONOMOUS PENETRANT TESTING**

(57) Disclosed herein is a system for autonomously diagnosing a defect in a component to which a penetrant has been applied and at least partially removed for penetrant testing, the system comprising: a device for positioning the component for inspection; a camera configured to take an image of the component when positioned by the device; and a first image evaluation module configured to: process the image of the component with a machine learning algorithm to detect from the image remaining penetrant on the component and based on characteristics of any detected penetrant to provide a first determination of whether or not the image indicates a defect in the component. A corresponding method is also disclosed.

Fig. 1

**Description**

FIELD

This disclosure relates to a system for autonomously diagnosing a defect in a component, in particular using penetrant testing. It also relates to a corresponding method. This patent application is a result of a research project that has received funding from the European Union's Horizon 2020 research and innovation program under grant agreement MNET17_ADMA-1246.

BACKGROUND

Penetrant testing (PT) is a non-destructive test method used in manufacturing. PT is used for detecting porosity, cracks, fractures, laps, seams and other surface defects in a component. The component to be inspected is coated with a penetrant (dye) that is visible under ultraviolet (UV) or visible (white) light. The penetrant penetrates small surface imperfections, and then the surface of the component is wiped or cleaned in order to remove any penetrant on the surface of the component. Only penetrant that has penetrated into any surface-level discontinuity will remain. A developer may be applied to draw out the penetrant from such discontinuities, so that the penetrant is visible on the surface of the component. The component is then inspected by a qualified inspector to determine whether any penetrant is visible. If so, the shape, position and size of the visible penetrant indication are evaluated to determine the integrity of the component. For example, an inspector may conclude that a defect is present, and assess the type, position and size of that defect.
Evaluation of a defect by an inspector is subjective, and may be inconsistent between inspectors, or inconsistent over time as an inspector becomes fatigued and loses concentration.
It is therefore generally desirable to improve the quality and consistency of diagnosis of defects in components.

SUMMARY

According to a first aspect of the invention, there is provided a system for autonomously diagnosing a defect in a component to which a penetrant has been applied and at least partially removed for penetrant testing, the system comprising: a device for positioning the component for inspection; a camera configured to take an image of the component when positioned by the device; and a first image evaluation module configured to: process the image of the component with a machine learning algorithm to detect from the image remaining penetrant on the component and based on characteristics of any detected penetrant to provide a first determination of whether or not the image indicates a defect in the component.
As discussed above, evaluation of a defect by an inspector is subjective and may be inconsistent. By providing the above-described system for autonomously diagnosing a defect in a component to which a penetrant has been applied and at least partially removed for penetrant testing, wherein a machine learning algorithm is used to provide a determination of whether or not an image indicates a defect in the component, the quality and consistency of diagnosis of defects in components through penetrant testing can be improved.
As used herein, the term "component" includes a manufactured part that is intended for use in a vehicle such as an aircraft, or in any other machine or equipment. The term "component" as used herein is not limited, however, to a part intended for use in a larger whole; a "component" in the sense of the present disclosure can also be an item which can function on its own.
A "component to which a penetrant has been applied and at least partially removed for penetrant testing" is a component which has been prepared for penetrant testing by the application of a penetrant and the removal of excess penetrant. In other words, the component has been prepared broadly as described in the "Background" section of the present disclosure, by being at least partially coated with penetrant and then wiped or cleaned to remove the penetrant from the surface of the component.
The characteristics on which the provision of the first determination is based may include: the presence or absence of penetrant in the image; and the size, shape and position of any penetrant detected from the image.
The device for positioning the component for inspection may be a robotic device. For example, the device may be a robotic arm comprising a gripper for holding the component. In this way, the device can position the component for inspection by moving the arm or moving the gripper. The device may alternatively be a platform on which the component can rest. For example, the device may be a rotating table, which can position the component for inspection by rotating so as to turn the component.
The system may further comprise: a second image evaluation module, the second image evaluation module configured to: apply predetermined image processing and feature classification rules to the image of the component to detect from the image remaining penetrant on the component and based on characteristics of any detected penetrant to provide a second determination of whether or not the image indicates a defect in the component; and an evaluation comparison module configured to compare the first determination with the second determination and: if the first and second determination are both that the image indicates a defect in the component, to determine that a defect is present in the component; if the first and second determination are both that the image does not indicate a defect in the component, to determine that a defect is not present in the component.

By providing a second image evaluation module that uses predetermined image processing and feature classification rules, in addition to the first image evaluation module that uses a machine learning algorithm, the quality and consistency of diagnosis of defects in components can be further improved, at least in that each module acts as a check on the other.

The first determination and second determination may each comprise a measure of the extent of defects of the component and the evaluation comparison module may be configured to determine whether or not a defect is present based on the measure of the extent of defects of the component.

The measure of the extent of defects of the component may be, or may provide, a measure of the reliability of the component. For example, the measure of reliability of the component may be the inverse of the measure of the extent of defects of the component. In this way, a high value for the measure of the extent of defects would correspond to a low value for the measure of reliability of the component, and vice versa. The measure of the reliability of the component may be a value from a range in which the upper limit is a value indicating that no defects are present and the lower limit is a value indicating that the component is unacceptably damaged. The range may be, for example, 0 to 100, wherein a measure of the reliability of the component of 100 indicates that no defects are present and a measure of the reliability of the component of 0 indicates that the component is unacceptably damaged. Values between the lower limit and the upper limit may indicate that one or more defects are present in the component but those features such as their type, class, size, or position mean that the component is not unacceptably damaged. In other words, even if an indication of a defect is present, it may be determined that the indication is not significant. In such a case, the measure of the reliability of the component will be higher than a case in which a significant defect is present.

The evaluation module may be configured to determine that no defect is present if a weighted sum of the measures of reliability of the component is greater than a first threshold measure.

By using a weighted sum of the measures of the reliability of the component from the first and second evaluation modules, the outputs of these modules can be combined while taking into account the certainty of the evaluation of the first evaluation module and the second evaluation module. For example, the determination provided by the first image evaluation module, comprising a measure of the reliability of the component, can be weighted based on the certainty of the first image evaluation module, represented by a percentage between 0 and 100%. The weighted-sums approach also represents a simple way of combining the first determination and second determination without requiring undue processing.

The evaluation module may be configured to determine that a defect is present if a weighted sum of the measures of the reliability of the component is less than or equal to a second threshold measure.

The first threshold measure and the second threshold measure may be the same. In that case, the evaluation module will have two outputs: that a defect is not present, or that a defect is present.

The first threshold measure may be higher than the second threshold measure. In this case, the evaluation module may be configured to determine that the status of the component is undecided if the weighted sum of the measures of the reliability of the component is at or between the two thresholds. When the weighted sum of the measures of the reliability of the component is less than or equal to the first threshold measure and greater than or equal to the second threshold measure, the evaluation module may be configured to provide the image of the component to a qualified inspector for assessment.

In this way, the system can help to ensure that false determinations of either acceptability or unacceptability of the component are reduced, by providing borderline cases to a qualified inspector for assessment.

The evaluation module may be configured to determine whether or not a defect is present by processing the measures of the reliability of the component using a fuzzy logic inference model. For example, the evaluation module may be configured to process the measures of the reliability of the component using a fuzzy logic inference model to convert its value on a scale descriptive of the component status and applying fuzzy rules to the converted value. In one example, the evaluation module may be configured to process the measures of the reliability of the component using a fuzzy logic inference model and convert these measures to membership functions including at least one selected from the group comprising: "no defect", "negligible defect", "dangerous defect" and "undecided". Fuzzy rules are then applied to these outputs by a fuzzy inference system to provide a final determination on the component.

Processing the measures of the reliability of the component using a fuzzy logic inference model can take into account the certainty of the evaluation of the first evaluation module and the second evaluation module. For example, as with the weighted-sums approach described above, the first and second determination (by the first and second image evaluation modules, respectively), can each be weighted based on the certainty of evaluation of their respective image evaluation module. Fuzzy rules taking into account this weighting can be applied to provide an output in the form of a value representing the reliability of the component.

When the evaluation module is configured in this way, more flexibility can be added in the evaluation than in the case in which a weighted sums approach is used. For example, in the weighted sums approach, the inputs are simplified with an equation, but the reality might be more complex than that. For example, if the shape found by the first image evaluation module is bigger than a threshold value and the position is close to one of the zones (i.e. edges of the component), then the first image evaluation module's evaluation might be more important than the evaluation of the second image evaluation one. This is because the second image evaluation module will determine that there is a distance between defect and edge, so the defect is not in the edge. The first image evaluation module, one the other hand, based on human inputs, will determine that the defect is distant from the edge, but that it is better to consider the defect in the other zone, because the defect might be also under the visible area. These complex cases can be dealt with easily with fuzzy rules which can adapt the weights given to the outputs of the first and second image evaluation modules based on defect type and position, so as to provide an adaptive way of providing the final evaluation. As mentioned above, the first image evaluation module is configured to provide a first determination of whether or not the image indicates a defect in the component. This first determination may further include a determination of one or more of the following: the type of a defect; the shape of a defect; the size of a defect; and the position of a defect. Similarly, the second image evaluation module may be configured to provide a second determination of whether or not the image indicates a defect in the component, wherein the second determination includes a determination of one or more of: the type of a defect; the shape of a defect; the size of a defect; and the position of a defect.

The above-described methods of determining whether or not a defect is present using a weighted-sums or fuzzy logic approach may be performed for each defect. A final evaluation of the reliability of the part can then be provided based on the results for each defect. For example, where one defect is sufficient for a component to be deemed unacceptable, then if any of the weighted sums of the measures of reliability of the component is greater than a threshold measure, then it may be determined that the component is unacceptable. In this way, it is possible to avoid to aggregate errors and evaluate single defects.

The system may further comprise a controller configured to control movement of the device for positioning a component for inspection. The device for positioning the component for inspection may comprise a robotic device. The device may comprise: a developer applicator for applying a developer to the component and optionally a cleaning device for removing excess penetrant. The controller may be configured additionally to control operation of the developer applicator and optionally of the cleaning device.

The controller may be configured to receive at least one of the first and second determinations of whether or not the image indicates a defect in the component, including the determination of one or more of: the type of a defect; the shape of a defect; the size of a defect; and the position of a defect, and to control the operation of the developer applicator and cleaning device based on the first and/or second determination. For example, the controller can evaluate the amount of developer to be used and movement of the developer applicator needed to cover the defect area.

The system may comprise a graphical user interface (GUI) configured to receive inputs specifying the position, size, shape and type of a defect in a component corresponding to an image of the component and to provide these inputs to the first image evaluation module with the corresponding image of the component for training the first image evaluation module.

Generally, existing systems for recording defects in a component include data such as the size and type of a defect, but do not capture accurately the position of a defect on a component. By providing a GUI configured to receive inputs specifying the position of the defect, improved training data can be provided to the first image evaluation module, resulting in a more accurate determination of whether or not an image indicates a defect in the component. This is particularly the case in examples in which the GUI is configured to display a 3D model of the component and to receive inputs specifying the position of the defect on the 3D model.

According to a second aspect of the invention, there is provided a method for autonomously diagnosing a defect in a component, the method comprising: using device, positioning the component for inspection; using a camera, taking an image of the component positioned for inspection; and under control of one or more computing systems configured with executable instructions, processing the image of the component with a machine learning algorithm to provide a first determination of whether or not the image indicates a defect in the component.

As discussed above, by providing a method in which autonomous diagnosis of a defect in a component is performed using a machine learning algorithm, the quality and consistency of diagnosis of defects in components can be improved. Effects described above in relation to the first aspect apply to the corresponding features of this second aspect.

The method may further comprise, under control of the one or more computing systems: applying predetermined image processing and feature classification rules to the image of the component to provide a second determination of whether or not the image indicates a defect in the component; and comparing the first determination with the second determination and: if the first and second determination are both that the image indicates a defect in the component, determining that a defect is present in the component; if the first and second determination are both that the image does not indicate a defect in the component, determining that a defect is not present in the component.

The first determination and second determination may each comprise a measure of the extent of defects of the component, and determining whether or not a defect is present may be based at least in part on the measures of the extent of defects of the component. The measures of the extent of defects may provide a measure of the reliability of the component, as discussed above.

Determining whether or not a defect is present may comprise calculating a weighted sum of the measures of reliability of the component and determining that no defect is present if a weighted sum of the measures of the reliability of the component of the component is greater than a first threshold measure.

Determining whether or not a defect is present may comprise: processing the measures of the reliability of the component of the component using a fuzzy logic inference model.

The device may comprise a robotic device. The method may further comprise using a developer applicator of the device, applying a developer to the component; and using a cleaning device of the device, removing excess penetrant.

The method may further comprise: at a graphical user interface, receiving inputs specifying the position, size and type of a defect in a component corresponding to an image of the component; providing these inputs to the first image evaluation module with the corresponding image of the component; and training the first image evaluation module based on the provided inputs and the corresponding image of the component.

The method may comprise, at the graphical user interface, displaying a 3D model of the component. Receiving an input specifying the position of a defect in the component may comprise receiving an input specifying the position of the defect on the 3D model.

The method may comprise, using the one or more computer systems, controlling the device to position the component for inspection and controlling the camera to take an image of the component when positioned for inspection. The method may further comprise repeating these steps for a plurality of different positions of the component. In this case, the remaining method steps can be repeated for the image taken for each position of the component. In this way, all relevant parts of the component can be analysed for defects.

According to a third aspect of the invention, there is provided a computer-readable medium comprising computer-implementable instructions for causing a computer to cause a device to position a component for inspection and a camera to take an image of the component; and to process the image of the component with a machine learning algorithm to provide a first determination of whether or not the image indicates a defect in the component.

The computer-implementable instructions may additionally be for causing a computer to apply predetermined image processing and feature classification rules to the image of the component to provide a second determination of whether or not the image indicates a defect in the component; and to compare the first determination with the second determination and: if the first and second determination are both that the image indicates a defect in the component, determine that a defect is present in the component; if the first and second determination are both that the image does not indicate a defect in the component, determine that a defect is not present in the component.

The first determination and second determination may each comprise a measure of the reliability of the component of the component and the instructions may be for causing a computer to determine whether or not a defect is present based at least in part on the measures of the reliability of the component.

The instructions may be for causing a computer to determine that no defect is present if a weighted sum of the measures of the reliability of the component is greater than a first threshold measure. The instructions may be for causing a computer to determine that a defect is present if a weighted sum of the measures of the reliability of the component is less than a second threshold measure.

As discussed above, the first threshold measure and the second threshold measure may be the same. In that case, there will be two outputs: that a defect is not present, or that a defect is present.

As also discussed above, the first threshold measure may be higher than the second threshold measure. In this case, the instructions may be for causing a computer to determine that the status of the component is undecided if the weighted sum of the measures of the reliability of the component is at or between the two thresholds. When the weighted sum of the measures of the reliability of the component is less than or equal to the first threshold measure and greater than or equal to the second threshold measure, the instructions may be for causing a computer to provide the image of the component to a qualified inspector for assessment.

The instructions may be for causing a computer to determine whether or not a defect is present at least in part by: processing the measures of the reliability of the component using a fuzzy logic inference model.

The instructions may be for causing a computer to cause a robotic device to apply developer to the component and remove excess penetrant.

Optional features of the each aspect are also optional features of each other aspect, with changes of terminology being inferred by the skilled addressee where necessary for these to make sense.

**BRIEF DESCRIPTION OF THE DRAWINGS**

Specific embodiments will be described below by way of example only and with reference to the accompanying drawings, in which:

Figure 1 shows a schematic view of a system for autonomously diagnosing a defect in a component, the system including a robotic device and camera;

Figure 2 shows a schematic view of the robotic device and camera;

Figure 3 shows a flow chart of a method for autonomously diagnosing a defect in a component with a first image evaluation module;

Figure 4 shows a flow chart of a method for autonomously diagnosing a defect in a component with a first and second image evaluation module;

Figure 5a and 5b show flow charts of the steps of the method of Figure 4 that relate to determining whether or not a defect is present in the component;

Figure 6 shows a computer-readable medium comprising instructions relating to the disclosed system and method; and

Figure 7 shows a plot of a value of reliability of a component against measures of reliability of the component provided by the first image evaluation module and the second image evaluation module.

**SPECIFIC DESCRIPTION OF CERTAIN EXAMPLE EMBODIMENTS**

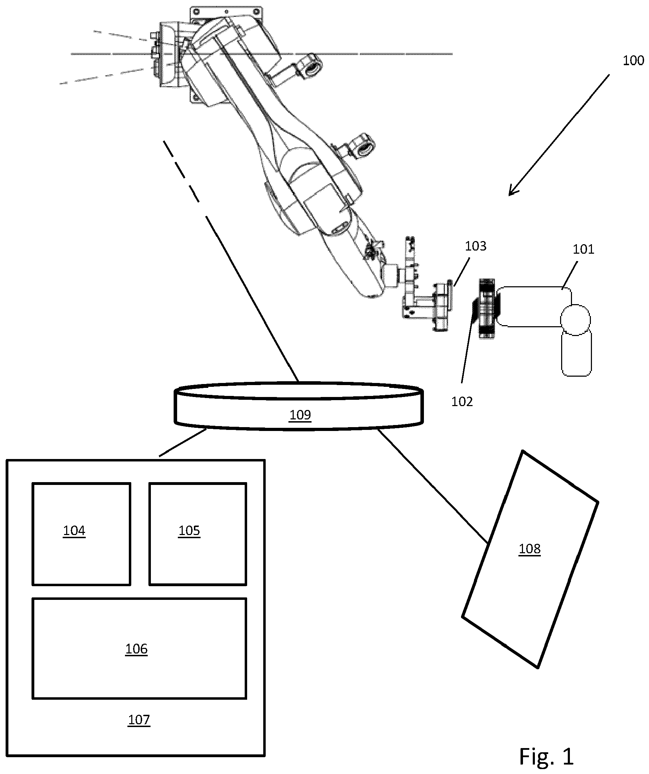

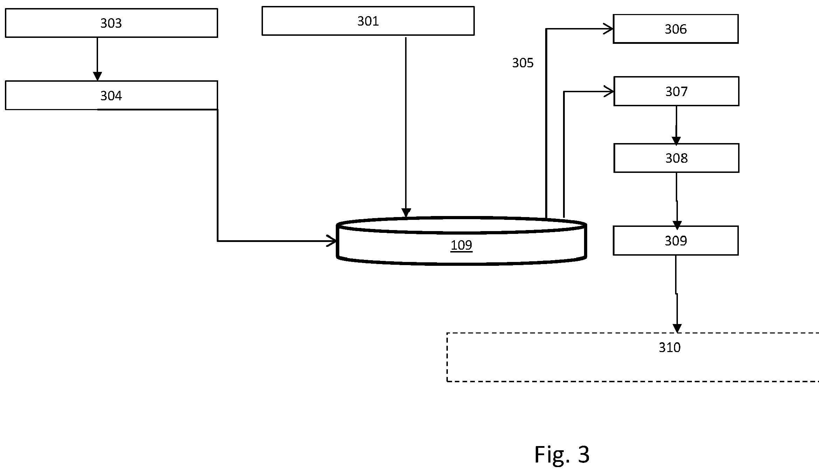

**Figure 1** shows a system 100 for autonomously diagnosing a defect in a component to which a penetrant has been applied and at least partially removed for PT. The system 100 includes a device 101 for positioning a component for inspection. In this example, the device 101 is a robotic device. The system also includes a camera 103 and a first image evaluation module 104. The camera 103 is configured to take an image of the component when positioned by the robotic device 101. The first image evaluation module 104 is configured to process the image of the component with a machine learning algorithm to detect from the image remaining penetrant on the component and based on characteristics of any detected penetrant to provide a first determination of whether or not the image indicates a defect in the component. In other words, the first image evaluation module 104 is a module which has developed through machine learning an image-evaluation algorithm based on training data and can apply this to one or more images of a component or pieces to determine, based on characteristics of any penetrant detected in the image, whether or not the images indicate defects. The first image evaluation module 104 is implemented on a computer 107. The computer 107 is in communication with a database 109, which can be on the computer 107 or remote to the computer 107. The database 109 in turn is in communication with the camera 103 of the system 100, so as to receive and store images from the camera 103. The first image evaluation module 104 and database 109 are most readily understood in relation to the functions they perform and will therefore be described in more detail below with reference to **Figure 3.**

The camera 103 can detect UV or white light. It would be understood by the skilled person how to select an appropriate camera based on the type of PT implemented. The camera, or the device on which it is mounted, can also include a lighting device (not shown), which is arranged so as to illuminate the component when the system 100 is in use. Again, the light can be UV or white light depending on the type of PT implemented.

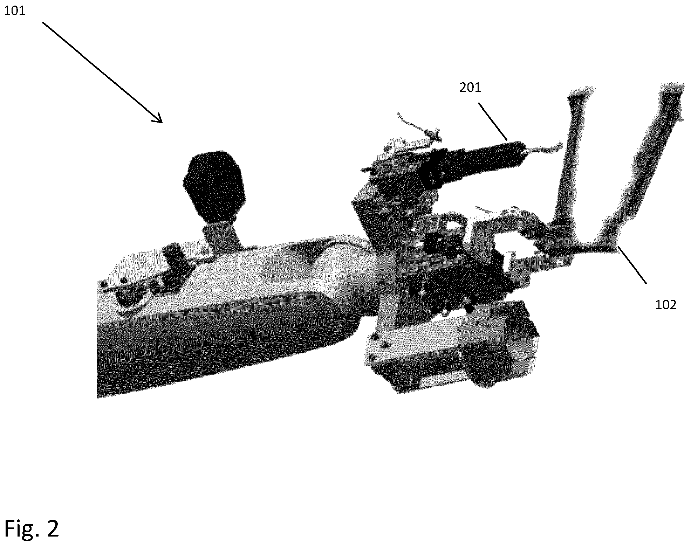

The robotic device 101 will now be described in more detail with reference to **Figure 2.** The robotic device 101 in this example is in the form of an anthropomorphic robot with a holder 102 in the form of a gripping device for gripping the component. As can be seen from Figure 2, the gripping device is connected to the robot wrist. In this example, the robotic device 101 further includes: a cleaning device 201 for removing excess penetrant and a developer applicator for applying developer to the component, as well as a controller for controlling operation of the cleaning device and developer applicator. The controller is implemented on the computer 107. In other examples, the controller can alternatively be implemented in any other available external control unit, for example a programmable logic controller (PLC) connected to the device for positioning the component for inspection (for example, connected to the robotic device 101 and the devices connected to the wrist of the robotic device 101).

In other examples, the device for positioning a component for inspection can take the form of any other device suitable for this purpose. For example, the device may be a platform on which the component can be placed. The platform can rotate so as to turn the component with respect to the camera. This is particularly useful in the case of larger parts which cannot easily be manipulated by the robotic device. The device may comprise both a platform and a robotic device. For example, where the device has a developer applicator and/or a cleaning device, as discussed below, these may form part of a robotic device (as discussed below), but the device may nevertheless include a platform on which the component can be placed.

Returning, now, to **Figure 1,** in this example, the system 100 includes a GUI 108 configured to receive inputs specifying the position, size and type of a defect in a component corresponding to an image of the component. The GUI 108 is configured to provide these inputs to the first image evaluation module 104 with the corresponding image of the component for training the first image evaluation module 104. In this example, the GUI sends the information specifying the position, size and type of a defect to the database 109 from which the first image evaluation module 104 receives this information. This will be described in more detail below with reference to **Figure 3.**

It would be understood by the skilled person that although in this example, training data for the first image evaluation module 104 is gathered via the GUI 108, the data could be gathered by other means, for example by inputs into the database 109 from paper or electronic records of the position, size and type of defects indicated by images of a component.

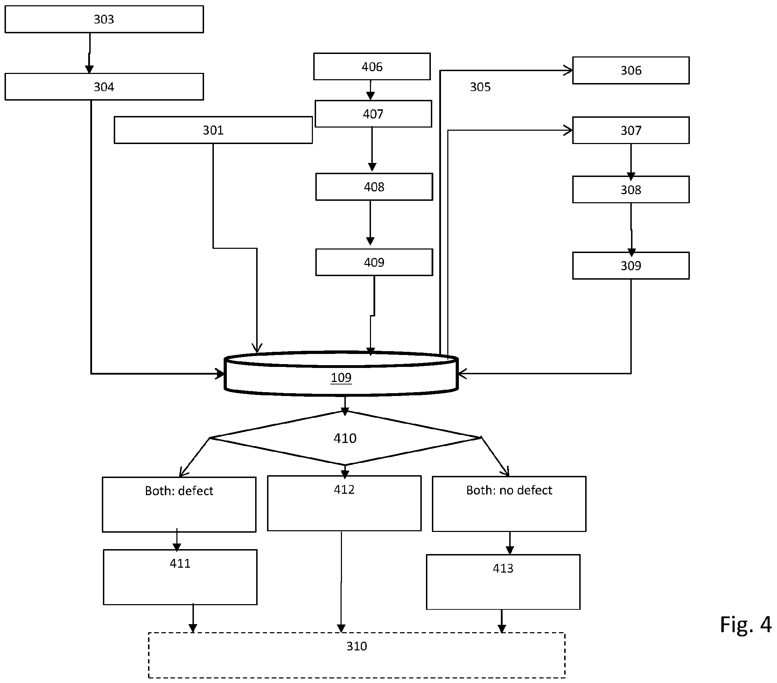

With continued reference to **Figure 1,** in this example, the system 100 also comprises a second image evaluation module 105. It will be understood by the skilled person that the second image evaluation module 105 need not be present in all examples, and that arrangements are contemplated in which only the first image evaluation module 104 is present. The second image evaluation module 105 is, like the first image evaluation module 104, implemented on a computer. In this example, the two modules 104, 105 are implemented on the same computer 107. It will be understood, however, that in other examples, the two modules may not be local to each other or to the robotic device 101 and camera 103. The second image evaluation module 105 is configured to apply predetermined image processing and feature classification rules to the image of the component to provide a second determination of whether or not the image indicates a defect in the component. In other words, the second image evaluation module 105 is a module which has been programmed with image processing and feature classification rules so as to be able to apply these to an image of a component and thus determine whether or not that image indicates a defect. The second image evaluation module 105 is most readily understood with reference to the functions it performs and will be described in more detail below with reference to **Figure 4.**

As shown in **Figure 1,** when, as in this example, the system has both first and second image evaluation modules 104, 105, the system 100 also includes an evaluation comparison module 106. Again, in this example, the evaluation comparison module 106 is implemented on the computer 107, but it would be understood that it could be implemented remotely, provided that however it was implemented the outputs of the first and second image evaluation modules 104, 105 are available to the evaluation comparison module 106 as inputs. The evaluation comparison module 106 is configured to compare the first determination with the second determination and: if the first and second determination are both that the image indicates a defect in the component, to determine that a defect is present in the component; if the first and second determination are both that the image does not indicate a defect in the component, to determine that a defect is not present in the component. In other words, in the simple cases that both the first image evaluation module 104 and the second image evaluation module 105 agree regarding the presence or absence of an indication of a defect in the image, the evaluation comparison module 106 is configured to determine that there is or is not a defect, respectively. The evaluation comparison module 106 is most readily understood in operation, and will be described in more detail below with reference to **Figure 4.**

The first image evaluation module 104, the second image evaluation module 105 and the evaluation comparison module 106 in this example are hardware modules implemented in hardware on the computer 107. However, in other examples, one or more of the first image evaluation module 104, the second image evaluation module 105 and the evaluation comparison module 106 could be implemented as logical features of general circuitry such as a CPU or GPU. One or more of these modules 104, 105 or 106 could also or alternatively be implemented in an application-specific integrated circuit (ASIC) or field-programmable data array.

With reference to **Figure 3,** the operation of the system 100 in an example in which only a first image evaluation module 104 is present (and the above-described second image evaluation module 105 and evaluation comparison module 106 are not present) will now be described. As discussed above, the system includes a device 101 for positioning a component for inspection, a camera 103 and a first image evaluation module 104. The camera 103 is configured to take an image of the component when positioned by the device 101. The first image evaluation module 104 is configured to process the image of the component with a machine learning algorithm to detect from the image remaining penetrant on the component and based on characteristics of any detected penetrant to provide a first determination of whether or not the image indicates a defect in the component.

In overview, the system 100 operates as follows: using the device 101, the component is positioned 303 for inspection; using the camera 103, an image of the component is taken 304; and under control of one or more computing systems 107 configured with executable instructions, the image of the component is processed 308 with a machine learning algorithm to detect from the image remaining penetrant on the component and based on characteristics of any detected penetrant to provide 309 a first determination of whether or not the image indicates a defect in the component.

These steps will be described in more detail below but first, with continued reference to **Figure 3,** the training of the first image evaluation module 104 will be described. In this example, the system 100 includes the GUI 108 described above. In overview, the training is performed as follows. First, at the GUI 108, inputs specifying the position, size and type of a defect in a component corresponding to an image of the component are received 301. Then, these inputs are provided 305 to the first image evaluation module 104 with the corresponding image of the component, and the first image evaluation module 104 is trained 306 based on the provided inputs and the image of the component. As can be seen from **Figure 3,** in this example, the inputs are provided via the database 109.

The GUI 108 is configured to display a 3D model of the component and to receive inputs specifying the position of the defect on the 3D model. Thus, in use, a qualified inspector views the 3D model of the component on the GUI, views a component suitably prepared for PT, and, based on the visible indications on the component, specifies the position of a defect in the component on the 3D model. The operator also inputs the size and type of the defect. This information, along with a corresponding image or images of the component is input 301 into the database. The first image evaluation module 104 is trained 306 based on the data and corresponding image. This process is repeated until the first image evaluation module 104 has been trained to a desired level. As just one example, 50 images with their corresponding inputs specifying the size, type and position of a defect may be provided 305 to the first image evaluation module 104 as training data for each position of a defect on a particular type of component. More or fewer images and corresponding inputs may be provided 305 based on the availability of such images and inputs and the desired accuracy of the determination of the first image evaluation module 104 of whether or not the image indicates a defect in the component.

With continued reference to **Figure 3,** in order to inspect a component, the component is positioned 303 for inspection using the device 101. An image of the component is taken 304. The first image evaluation module 104 processes 308 the image of the component with the machine learning algorithm developed based on the training data described above. The first image evaluation module 104 then provides 309 a first determination of whether or not the image indicates a defect in the component.

This determination can include a measure of the reliability of the component, for example a score from 0 to 100, where a score of 100 represents no defects and a score of 0 indicates that the component is unacceptably damaged. The score can be considered to be an indication of the probability that the component is reliable, where 0 represents that the component is not reliable, and 100 represents a certainty that the component is reliable.

Optionally, a qualified inspector may inspect 310 the component to approve the decision output by the first image evaluation module 104.

With reference now to **Figure 4,** use of the system 100 when it includes a second image evaluation module 105 in addition to the first image evaluation module 104 will now be described.

In overview, the system 100 operates as follows. As described above in relation to the operation of the system when it does not include a second image evaluation module 105 or evaluation comparison module 106, the following steps are performed: using the device 101, the component is positioned 303 for inspection; using the camera, taking an image of the component when positioned for inspection; and under control of one or more computing systems configured with executable instructions, the image of the component is processed 308 with a machine learning algorithm to detect from the image remaining penetrant on the component and based on characteristics of any detected penetrant to provide 309 a first determination of whether or not the image indicates a defect in the component.

In addition to these steps, when, as in **Figure 4,** the system 100 includes a second image evaluation module 105 and an evaluation comparison module 106, the following steps are performed (these will be described in more detail below, with continued reference to **Figure 4):** under control of the one or more computing systems: predetermined image processing and feature classification rules are applied 408 to the image of the component to detect from the image remaining penetrant on the component and based on characteristics of any detected penetrant to provide 409 a second determination of whether or not the image indicates a defect in the component; and the first determination and the second determination are compared 410 and: if the first and second determination are both that the image indicates a defect in the component, it is determined 411 that a defect is present in the component; and if the first and second determination are both that the image does not indicate a defect in the component, it is determined 413 that a defect is not present in the component.

Accordingly, in the system 100 including both first and second image evaluation modules 104, 105, the first image evaluation module 104 is trained as described above and provides 309 a first determination of whether or not an image of a component being inspected indicates a defect in the component, as described above. In addition to this first determination, a second determination is also provided 409. This second determination is provided 409 by the second image evaluation module 105, which is programmed to identify indications of defects in images of components using standard image processing techniques which would be understood by the skilled person. The first determination provided 309 by the first image evaluation module 104 based on the machine learning algorithm developed by the first image evaluation module 104, and the second determination provided 409 by the second image evaluation module 105 based on its programming are compared by the evaluation comparison module 106. In the simple case in which both the first and second determinations indicate that a defect is present in the component, the evaluation comparison module 106 determines 411 that a defect is present in the component. In the other simple case, in which both the first and second determinations indicate that a defect is not present in the component, the evaluation comparison module 106 determines 413 that a defect is not present in the component.

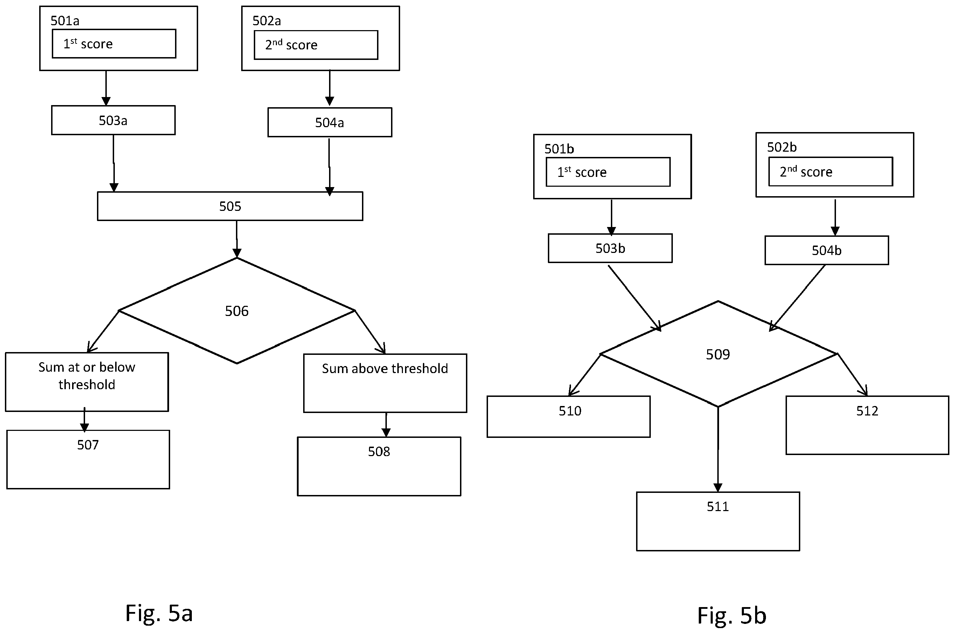

Whenever the first and second determinations are other than the simple cases described above, the evaluation comparison module 106 evaluates 412 the determinations in a more complex manner. Two principal methods of evaluating 412 the determinations are described in this disclosure, although other methods of evaluation are also contemplated (for example an artificial intelligence (AI)-based evaluation). Each of these two methods of evaluating 412 the determinations using the evaluation comparison module 106 will now be described, with reference to **Figures 5a** and **5b.**

In the methods of both **Figure 5a** and **Figure 5b,** the first determination and second determination each comprise a measure of the reliability of the component, as described above and wherein determining whether or not a defect is present is based at least in part on the measures of the reliability of the component, as briefly described above with reference to **Figure 3.** For example, the measure of the reliability of the component is a score indicating the reliability of the component. In the present example, this score is a score ranging from 0 to 100, where a score of 0 indicates that the component is unacceptably damaged (i.e. is not reliable) and a score of 100 indicates that the component has no defects (i.e. is reliable).

In the method of **Figure 5a,** determining whether or not a defect is present involves calculating a weighted sum of the measures of reliability of the component and determining that no defect is present if a weighted sum of the measures of the reliability of the component is greater than a first threshold measure. If the weighted sum of the measures of the reliability of the component is less than or equal to the first threshold measure, it is determined that a defect is present.

The method will now be described in more detail with continued reference to **Figure 5a.** As discussed above, the first determination and second determination each comprise a measure of the reliability of the component which is, in this example, in the form of a score from 0 to 100. The first determination comprising the first score is received 501 a by the evaluation comparison module 106, and the second determination comprising the second score is received 502a by the evaluation comparison module 106. The evaluation comparison module 106 applies 503a a weighting to the first score and also applies 504a a weighting to the second score. For example, determinations by the first image evaluation module 104 may be given less weight then determinations by the second image evaluation module 105. Thus, for example, the first score from the first image evaluation module 104 may have a weighting of 0.2 applied 503a to it, while the second score from the second image evaluation module 105 may have a weighting of 0.8 applied to it. Accordingly, the sum of the weighted scores will be 0.2(first score) + 0.8(second score). If, for example, the first score is 80 (for example the first image evaluation module 104 has determined that there is an 80% chance that the component is reliable) and the second score is 100 (for example the second image evaluation module 105 has determined that the component is reliable), the calculation will be as follows:

$$Sum\ of\ weighted\ scores = 0.2(80){+}0.8(100) = 96$$

The sum of the weighted scores is compared 506 to a threshold measure. For example, the threshold measure in the present case could be set at 90. If the sum less than or equal to the threshold measure, it is determined 507 that a defect is present. If the sum is greater than the threshold measure, it is determined 508 that no defect is present. Accordingly, with the weightings, scores and threshold measure set out above for this particular example, it would be determined 508 that no defect is present.

In some examples, the sum of the weighted scores can also be compared against a second threshold measure (this comparison is not illustrated in **Figure 5a).** This second threshold measure may be lower than the first threshold measure. In these examples, there are three possible determinations for the evaluation comparison module 106: that the sum is below the second threshold measure such that it is determined 507 that a defect is present; that the sum is greater than the first threshold measure such that it is determined 508 that no defect is present; and that the sum is greater than or equal to the second threshold measure and less than or equal to the first threshold measure, such that it is determined that it is uncertain whether the defect is present and the image should be provided to a qualified inspector for assessment.

In the method shown in **Figure 5b,** determining whether or not a defect is present involves processing the measures of the reliability of the component using a fuzzy logic inference model. For example, the model processes the measure of the reliability of the component and converts it to different membership functions (in this case, "no defect", "negligible defect", "dangerous defect" and "undecided"). Fuzzy rules are then applied to these outputs by a Fuzzy inference system to provide final determination on the component. Specifically, it is determined either that a defect is present and is either negligible or dangerous, that a defect is not present, or that it cannot be decided whether or not a defect is present. In order to make this procedure effective and reliable, all the Fuzzy membership function parameters are optimized by means of an evolutionary algorithm after comparing the output of the decision logic to expert operators' evaluations.

In the present example, the fuzzy rules are as follows (where M1 indicates the first determination, weighted for certainty of the first image evaluation module, and M2 indicates the second determination, weighted for certainty of the second image evaluation module):

1. If (M1 is low) and (M2 is low) then (output is Defect)
2. If (M1 is medium) and (M2 is low) then (output is Defect)
3. If (M1 is high) and (M2 is low) then (output is undecided)
4. If (M1 is low) and (M2 is medium) then (output is Defect)
5. If (M1 is medium) and (M2 is medium) then (output is undecided)
6. If (M1 is high) and (M2 is medium) then (output is No_defect)
7. If (M1 is low) and (M2 is high) then (output is undecided)
8. If (M1 is medium) and (M2 is high) then (output is No_defect)
9. if (M1 is high) and (M2 is high) then (output is No_defect)

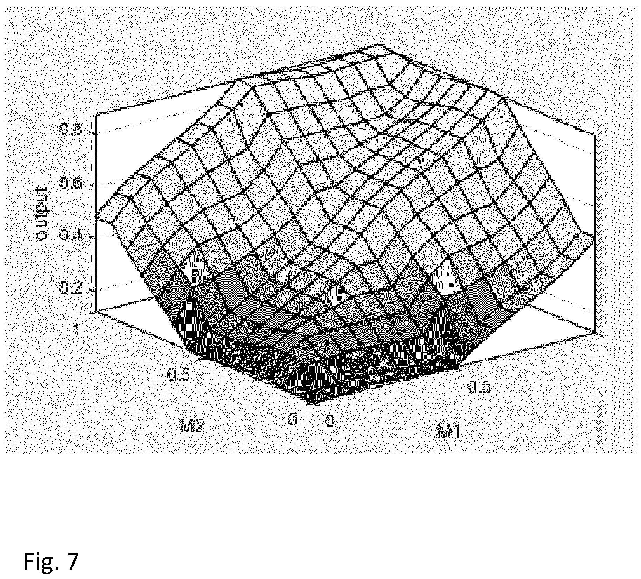

The output is a value of the reliability of the component, resulting in the surface plotted in **Figure 7,** with respect to M1 and M2.

Accordingly, as shown in **Figure 5b,** the first determination and second determination, each comprising a measure of the reliability of the component in the form of, respectively, a first and second score, are received 501b, 502b by the evaluation comparison module 106. The evaluation comparison module 106 applies 503b a weighting to the first score and also applies 504b a weighting to the second score. Fuzzy rules as described above are applied 509 to the scores. The evaluation comparison module 106 determines, based on these rules, that a defect is present 510, that the outcome is undecided 511, or that a defect is not present 512.

In the methods shown in **Figures 4, 5a** and **5b,** the determination by the evaluation comparison module can be provided to a qualified inspector for checking. For example, a check can be performed by a person qualified to carry out PT inspections. In such cases, the determination can be provided on the GUI 108. This allows for a qualified inspector to compare the determination with his own inspection of the component. The GUI 108 can be configured to receive inputs specifying one or more of the position, size and type of a defect so as to correct or amend these elements of one or more of: the first and second determinations (by the first or second image evaluation modules 104, 105 respectively) and the determination by the evaluation comparison module 106.

The methods shown in **Figures 4, 5a** and **5b** may additionally include using the developer applicator of the device to apply a developer to the component and may further include using the cleaning device of the device, removing excess penetrant. This is performed under control of the computer 107. Specifically, responsive to the first and/or second determinations, the computer 107 controls the developer applicator of the device to apply developer to the component.

The methods shown in **Figures 4, 5a** and **5b** may additionally include, using the computer 107, controlling the device 101 to position the component for inspection and controlling the camera to take an image of the component when positioned for inspection. The computer 107 can control the device 101 to position the component in a number of different positions for inspection, and control the camera to take an image of the component in each of these positions. The method then includes analysing these images in the manner described above, so as to analyse all relevant parts of the component for defects.

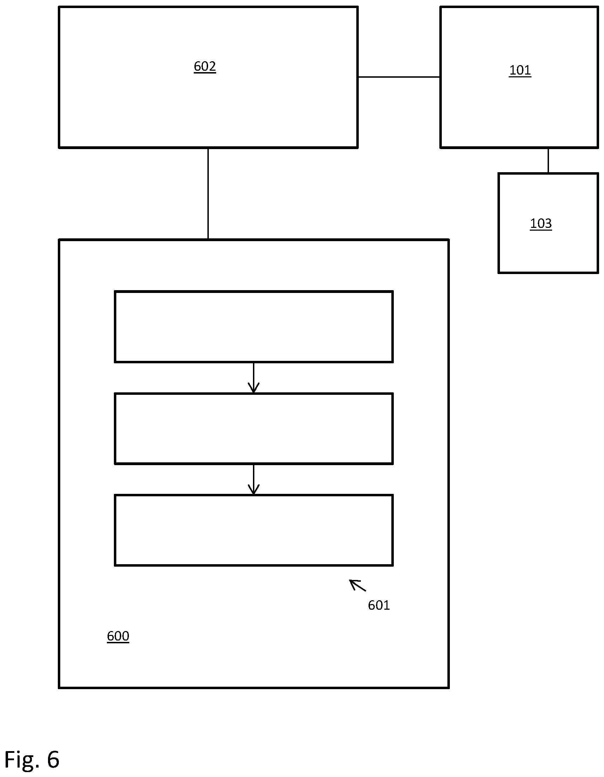

Computer-implementable instructions for causing a computer to carry out the method described herein (where relevant, by causing a device suitable for positioning a component for inspection and camera to carry out certain method steps) can be on a computer-readable medium (CRM). This is shown in **Figure 6. Figure 6** shows a CRM 600. The CRM 500 comprises computer-implementable instructions 601 that when executed by a computer 602 cause the device 101 to position 303 a component for inspection and cause the camera 103 to take an image of the component. The computer-implementable instructions 601 also cause the computer 602 to process 308 the image of the component with a machine learning algorithm to provide 309 a first determination of whether or not the image indicates a defect in the component. This method has been described in detail above with reference to **Figure 3.** The skilled person will also readily understand how the CRM could be configured to include computer-implementable instructions for carrying out the method described above with reference to **Figures 4, 5a** and **5b.**

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

There have now been described a system, method and computer-readable medium for autonomously diagnosing a defect in a component.

## Claims

**1.** A system for autonomously diagnosing a defect in a component to which a penetrant has been applied and at least partially removed for penetrant testing, the system comprising:

a device for positioning the component for inspection;

a camera configured to take an image of the component when positioned by the device; and

a first image evaluation module configured to:

process the image of the component with a machine learning algorithm to detect from the image remaining penetrant on the component and based on characteristics of any detected penetrant to provide a first determination of whether or not the image indicates a defect in the component.

2. The system of claim 1, further comprising:

a second image evaluation module, the second image evaluation module configured to:

apply predetermined image processing and feature classification rules to the image of the component to detect from the image remaining penetrant on the component and based on characteristics of any detected penetrant to provide a second determination of whether or not the image indicates a defect in the component; and

an evaluation comparison module configured to compare the first determination with the second determination and:

if the first and second determination are both that the image indicates a defect in the component, to determine that a defect is present in the component;

if the first and second determination are both that the image does not indicate a defect in the component, to determine that a defect is not present in the component.

3. The system of claim 2, wherein the first determination and second determination each comprise a measure of the extent of defects of the component and wherein the evaluation comparison module is configured to determine whether or not a defect is present based at least in part on the measures of the extent of defects of the component.

4. The system of claim 3, wherein the measures of the extent of defects of the component provide a measure of the reliability of the component and wherein the evaluation module is configured to determine that no defect is present if a weighted sum of the measures of reliability of the component is greater than a first threshold measure.

5. The system of claim 3, wherein the measures of the extent of defects of the component provide a measure of the reliability of the component and wherein the evaluation module is configured to determine whether or not a defect is present by processing the measures of reliability of the component using a fuzzy logic inference model.

6. The system of any preceding claim, wherein the device comprises:

a developer applicator for applying a developer to the component; and/or

a cleaning device for removing excess penetrant.

7. The system of any preceding claim, further comprising a graphical user interface configured to receive inputs specifying the position, size and type of a defect in a component corresponding to an image of the component and to provide these inputs to the first image evaluation module with the corresponding image of the component for training the first image evaluation module.

8. A method for autonomously diagnosing a defect in a component to which a penetrant has been applied and at least partially removed for penetrant testing, the method comprising:

using a device, positioning the component for inspection;

using a camera, taking an image of the component when positioned for inspection; and

under control of one or more computing systems configured with executable instructions, processing the image of the component with a machine learning algorithm to detect from the image remaining penetrant on the component and based on characteristics of any detected penetrant provide a first determination of whether or not the image indicates a defect in the component.

9. The method of claim 8, further comprising, under control of the one or more computing systems:

applying predetermined image processing and feature classification rules to the image of the component to detect from the image remaining penetrant on the component and based on characteristics of any detected penetrant to provide a second determination of whether or not the image indicates a defect in the component; and

comparing the first determination with the second determination and:

if the first and second determination are both that the image indicates a defect in the component, determining that a defect is present in the component;
if the first and second determination are both that the image does not indicate a defect in the component, determining that a defect is not present in the component.

10. The method of claim 9, wherein the first determination and second determination each comprise a measure of the extent of defects of the component, and wherein determining whether or not a defect is present is based at least in part on the measure of the extent of defects of the component.

11. The method of claim 10, wherein the measure of the extent of defects provides a measure of reliability of the component, and wherein determining whether or not a defect is present comprises: calculating a weighted sum of the measures of reliability of the component and determining that no defect is present if a weighted sum of the measures of reliability of the component is greater than a first threshold measure.

12. The method of claim 10, wherein the measure of the extent of defects provides a measure of reliability of the component, and wherein determining whether or not a defect is present comprises: processing the measures of reliability of the component using a fuzzy logic inference model.

13. The method of any of claims 8 to 12, wherein the method further comprises:

   using a developer applicator of the device, applying a developer to the component; and/or
   using a cleaning device of the device, removing excess penetrant.

14. The method of any of claims 8 to 13, further comprising:

   at a graphical user interface, receiving inputs specifying the position, size and type of a defect in a component corresponding to an image of the component;
   providing these inputs to the first image evaluation module with the corresponding image of the component; and
   training the first image evaluation module based on the provided inputs and the corresponding image of the component.

15. A computer-readable medium comprising computer-implementable instructions that when executed by a computer cause a device to position a component for inspection and a camera to take an image of the component; and cause the computer to process the image of the component with a machine learning algorithm to detect from the image remaining penetrant on the component and based on characteristics of any detected penetrant to provide a first determination of whether or not the image indicates a defect in the component.

100

103

101

102

109

104

105

106

107

108

Fig. 1

Fig. 2

| 303 |
| :---: |

| 301 |
| :---: |

| 306 |
| :---: |

305

| 304 |
| :---: |

| 307 |
| :---: |

| 308 |
| :---: |

| 109 |
| :---: |

| 309 |
| :---: |

| 310 |
| :---: |

Fig. 3

EP 3 955 206 A1

Fig. 4

Fig. 5b

Fig. 5a

Fig. 6

Fig. 7

Europäisches
Patentamt

European
Patent Office

Office européen
des brevets

# EUROPEAN SEARCH REPORT

Application Number

EP 20 19 0337

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | N.J. SHIPWAY ET AL: "Automated defect detection for Fluorescent Penetrant Inspection using Random Forest", NDT & E INTERNATIONAL, vol. 101, 1 January 2019 (2019-01-01), pages 113-123, XP055768858, GB ISSN: 0963-8695, DOI: 10.1016/j.ndteint.2018.10.008 * abstract * * page 113, column 1, paragraph 1 - page 117, column 2, paragraph 2 * ----- | 1-15 | INV. G06T7/00 G06T7/73 |
| X | Alba Augusto Cesar: "Image Acquisition and Processing in an Attempt to Automate the Fluorescent Penetrant Inspection", , 6 May 2011 (2011-05-06), pages 1-153, XP055768853, Retrieved from the Internet: URL:https://espace.etsmtl.ca/id/eprint/905 [retrieved on 2021-01-26] * abstract * * page 65, section 4.1, part a. * * page 70, last paragraph * * page 73, paragraph 2 * * page 79, paragraph 1 * * page 80, paragraph 1 * ----- | 1,8,15 | |

**TECHNICAL FIELDS SEARCHED (IPC)**

G06T

The present search report has been drawn up for all claims

| Place of search | Date of completion of the search | Examiner |
|---|---|---|
| Munich | 29 January 2021 | Turina, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)